# EUROPEAN PATENT APPLICATION

(11) **EP 4 807 691 A1**
(43) Date of publication of application: **16.09.2026**
(21) Application number: 25163192.5
(22) Date of filing: 12.03.2025
(51) Int. Cl.: G06V 10/774, G06V 10/82, G06V 20/69

(54) **DETECTING CELL OBJECTS**

(71) Applicant: Sartorius Lab Instruments GmbH & Co. KG, 37079 Göttingen (DE)
(72) Inventor: Jeremias, Julia, 37079 Göttingen (DE); Pape, Constantin, 37077 Göttingen (DE)
(74) Representative: Cohausz & Florack

(57) **Abstract**

Disclosed is inter alia a method comprising:
- obtaining image information of the digital image, wherein the image information indicates at least one cell object;
- determining, at least partially based on the image information, a mathematical distribution representing the at least one cell object, wherein the mathematical distribution at least partially depends on a size of the at least one cell object; and
- training the artificial neural network at least partially based on the mathematical distribution and the image information.

## Description

### TECHNICAL FIELD

Various exemplary embodiments according to the present disclosure relate to the technical field of image analysis using artificial intelligence. More specifically, various exemplary embodiments according to the present disclosure relate to a computer-implemented method of training an artificial neural network for detecting cell objects indicated by a digital image and a computer-implemented method for detecting cell objects indicated by a digital image.

### BACKGROUND

Counting and detecting cell objects (e.g. bacterial colonies growing on culture media or filter membranes) is an essential aspect of analytical processes in microbiological laboratories, such as quality control laboratories in the biopharma industry. Even today, many counts are compiled manually by humans, which is a time-consuming and error-prone task. Using computational image analysis for this process is therefore highly desirable.

However, from an image analysis perspective, diverse conditions such as for example low amounts of recorded data sets, varying image quality, different backgrounds as well as different cell object sizes, colors and shapes may cause various challenges. Current solutions rely on rather conventional image analysis techniques and have difficulties dealing with this complex problem space.

### SUMMARY OF SOME EXEMPLARY EMBODIMENTS

According to a first aspect of the present disclosure, a computer- implemented method of training an artificial neutral network for detecting cell objects indicated by a digital image is disclosed, wherein the method comprises:
- obtaining image information of the digital image, wherein the image information indicates at least one cell object;
- determining at least partially based on the image information, a mathematical distribution representing the at least one cell object, wherein the mathematical distribution at least partially depends on a size of the at least one cell object; and
- training the artificial neural network at least partially based on the mathematical distribution and the image information.

For example, a cell object may be understood as any discrete, organized structure or system composed of one or more cells. A cell object may for example be a single cell (e.g., a bacterium, yeast cell, or a human somatic cell) or a plurality of cells. Considering for example a bacterial cell, a cell object may comprise a plurality of such bacterial cells forming a bacterial colony (which, e.g., has grown from a single progenitor cell). For example, a cell object located on a surface (e.g. a cell culture container or a filter medium) may be of circular form or approximately circular form when viewed from the top. It shall be understood that the methods according to the various aspects of the present disclosure may not only be used to detect a particular type of cell objects (e.g., bacterial cells), but rather are applicable to various types of cell objects.

Image information of a digital image may for example be understood as data representing visual content of the digital image or at least a part of the digital image (e.g. in a digital format). A digital image may for example be an image that has been captured by a digital camera directed to a cell culture container or a filter medium, wherein at least one cell object may be located on the cell culture container or the filter medium. Therein, the cell culture container may for example be understood as a cell culture dish, a vessel, a well or a flask. The image information may then for example be obtained by receiving the image information from the digital camera or from a database storing the digital image after it has been captured by the digital camera.

A mathematical distribution may for example be understood as function or rule that describes how values are spread or distributed over a particular range or domain. For example, a mathematical distribution may provide a model for the likelihood or frequency of different outcomes or data points within that range. A mathematical distribution may comprise one or more parameters that may for example define a shape, location and scale of the distribution. These one or more parameters may allow the distribution to be tailored to model different types of data or phenomena. Mathematical distributions may for example be defined in various spaces (e.g., 1D, 2D, or 3D), and may take various forms depending on the characteristics of the data or the phenomenon being modeled. For example, a mathematical distribution may be a radial symmetric distribution (e.g., radial symmetric in 2D), which is symmetric around a central point, meaning that any rotation around this point leaves the distribution unchanged. Non-limiting examples for a mathematical distribution may be a Gaussian distribution, a uniform distribution, an exponential distribution, a Cauchy distribution, a binomial distribution, a Poisson distribution or a gamma distribution.

A mathematical distribution may for example represent at least one cell object by representing one or more characteristics (e.g. a size, a structure or a shape) of the at least one cell object. For example, a larger cell object (e.g., a cell object having a larger width) may be represented by a broader mathematical distribution, and a smaller cell object (e.g., a cell object having a smaller width) may be represented by a narrower mathematical distribution. Determining, at least partially based on the image information, the mathematical distribution representing the at least one cell object may then for example comprise selecting a suitable mathematical distribution and/or determining one or more parameters of the selected mathematical distribution, such that the determined mathematical distribution is tailored to model the image information (e.g. a plurality of pixel values) indicating the at least one cell object. As a result, the determined mathematical distribution (e.g., at least one parameter of the mathematical distribution) may at least partially depend on a size of the at least one cell object.

For example, training the artificial neural network at least partially based on the mathematical distribution and the image information may be understood to mean that a ground truth image (e.g., determined based on the mathematical distribution) is compared with a prediction (e.g., determined by the artificial neural network based on the image information). By this comparison, the performance of the artificial neural network may be assessed, wherein a difference between the prediction and the ground truth image may be quantified by calculating a loss function (e.g. using a mean squared error) that measures the error in the artificial neural network's prediction. The calculated loss may then be used to perform backpropagation, wherein gradients of the loss with respect to the network's weights are computed and used for updating the weights (e.g., through an optimization algorithm such as gradient descent).

For example, the method according to the first aspect provides an advantageous approach for training an artificial neural network for detecting cell objects indicated by image information of a digital images. In particular, by determining a mathematical distribution that represents the at least one cell object to be detected and that depends on the respective size of the at least one cell object, size variations among a plurality of cell objects can be taken into account for the training process of an artificial neural network. Accordingly, the network's performance of detecting and counting cell objects can be improved.

Further, the method according to the first aspect is advantageous compared to conventional image analysis techniques. For example, the approach of the present disclosure goes beyond the technique of density-based counting, which lacks object detection and rather focusses on mere counting of cell objects, thereby neglecting the actual location of the cell objects. Instead, the present approach allows for accurately detecting cell objects and their location, but still does not require precise (e.g. pixel-wise) segmentation for each cell object.

According to a second aspect of the present disclosure, a computer-implemented method of training an artificial neural network for detecting cell objects indicated by a digital image is disclosed, wherein the method further comprises:
- obtaining a first plurality of digital images, wherein the first plurality of digital images consists of digital images indicating one or more cell objects located on a respective cell culture container;
- training the artificial neural network at least partially based on the first plurality of digital images;
- obtaining a second plurality of digital images, wherein the second plurality of digital images includes i) at least one digital image indicating one or more cell objects located on a respective cell culture container and ii) at least one digital image indicating one or more cell objects located on a respective filter medium; and
- training the artificial neural network at least partially based on the second plurality of digital images after training the artificial neural network at least partially based on the first plurality of digital images.

For example, the first plurality of digital images may only include digital images indicating cell objects that are located on a respective cell culture container. In particular, the first plurality of digital images may for example not include digital images indicating cell objects that are located on a filter medium. When obtaining the first plurality of digital images, respective image information (e.g., a plurality of pixel values) of each digital image of the first plurality of digital images may be obtained as described for the method according to the first aspect.

For example, the artificial neural network may be trained based on the first plurality of digital images by determining mathematical distributions representing cell objects and by training the artificial neural network based on these mathematical distributions and the image information for each digital image of the first plurality of digital images.

In contrast to the first plurality of digital images, the second plurality of digital images may for example be a mixture of digital images indicating cell objects that are located on a respective cell culture container and of digital images indicating cell objects that are located on a filter medium. When obtaining the second plurality of digital images, respective image information (e.g., a plurality of pixel values) of each digital image of the second plurality of digital images may be obtained as described for the method according to the first aspect.

For example, the artificial neural network may be trained based on the second plurality of digital images by determining mathematical distributions representing cell objects and by training the artificial neural network based on these mathematical distributions and the image information for each digital image of the second plurality of digital images.

For example, the method according to the second aspect provides an advantageous approach for training an artificial neural network for detecting cell objects indicated by image information of the digital images. In particular, size variations among a plurality of cell objects can be taken into account for the training process of an artificial network as described with reference to the method according to the first aspect. In addition, an artificial neural network trained according to the method of the second aspect may be particularly suitable for detecting and counting cell objects regardless of whether such cell objects are located on a cell culture container (e.g. an agar plate) or on a filter medium (e.g. a filter membrane of a particular background colour and including a grid pattern). By pretraining an artificial neural network with digital images indicating cell objects located on cell culture containers and afterwards fine-tuning the pretrained network by training with both digital images indicating cell objects located on cell culture containers and filter media, transfer learning may be used to adapt the network for detecting cell objects under both conditions. This way, it may be avoided that an artificial neural network would need to be trained from scratch separately for detecting cell objects located on cell culture containers and filter media.

According to a third aspect of the present disclosure, a computer-implemented method for detecting cell objects indicated by a digital image is disclosed, wherein the method comprises:
- obtaining image information;
- determining, by using an artificial neural network trained according to the method of the first or second aspect, whether the image information indicates one or more cell objects; and
- detecting, if the image information indicates one or more cell objects, a number and/or respective locations of the one or more cell objects by using the artificial neural network.

For example, image information of the digital image (e.g., a plurality of pixel values of the digital image) may be obtained, wherein the obtained image information may indicate at least one cell object. In another example, image information of a digital image may be obtained that does not indicate any cell objects located on a cell culture container or filter medium (if, e.g., no growth of cell objects has occurred by the time of capturing the digital image).

An artificial neural network trained as described for the method according to first and second aspects may for example be used to determine whether the obtained image information indicates one or more cell objects. If it is determined that the obtained image information indicates one or more cell objects, the artificial neural network may for example be used to detect a number and/or respective locations of the one or more cell objects indicated by the image information. In another example, if the obtained image information does not indicate any cell objects located on a cell culture container or filter medium, the artificial neural network may be used to determine that there are no cell objects indicated by the obtained image information.

For example, by using an artificial neural network, which is trained as described with reference to the methods according to the first and second aspect, the method according to the third aspect provides an advantageous approach for detecting and counting cell objects under diverse conditions such as for example size variation among cell objects colonies and cell objects being located on different backgrounds.

According to a fourth aspect of the present disclosure, an apparatus is disclosed, wherein the apparatus is configured to and/or comprises means for performing the method of the first, second and/or third aspect. Alternatively, the apparatus may comprise respective means (e.g., computer means) for performing and/or controlling the steps of the method according the first, second and/or third aspect. In this case, either all steps of the method can be controlled or all steps of the method can be performed or one or more steps can be controlled and one or more steps can be performed. One or more of the steps may also be performed and/or controlled by the same unit For example, one or more of the steps may be performed by one or more processors.

For example, components and/or means of the apparatus according to the fourth aspect may be used to implement an artificial neural network (e.g., the artificial neural network trained according to the method of the first and second aspect and used according to the method of the third aspect). In particular, a processor of the apparatus may for example perform mathematical operations needed for the artificial neural network, such as matrix multiplications, additions and activations. During training as described with reference the methods of the first and second aspect, the processor may for example handle forward propagation (e.g., calculating outputs) and backpropagation (e.g., updating weights based on errors). For example, a program memory and a main memory of the apparatus may be used to store the artificial neural network's parameters (e.g., weights and biases), input data, intermediate results (e.g., outputs from each network layer) and gradients during training.

For example, an artificial neural network implemented by components and/or means of the apparatus according to the fourth aspect may be understood as a computational model inspired by the structure and function of the human brain (which, e.g., is specifically designed to perform image analysis). Such an artificial neural network may consist of layers of interconnected nodes, where each connection has an associated weight The artificial neural network processes input data (e.g., image information of digital images) by passing it through these layers and performing a series of mathematical operations. The final output of the artificial neural network may then be used to make predictions as described with reference to the method according to the first, second and third aspect.

According to a fifth aspect of the present disclosure, a computer program is disclosed, which, when the program is executed by a computer, cause the computer to perform the method of the first, second and/or third aspect. For example, the computer program comprises program instructions which cause a processor to perform and/or control the method according to the present disclosure when the computer program runs on the processor. For example, a processor is intended to be understood as meaning, inter alia, control units, microprocessors, microcontrol units such as microcontrollers, digital signal processors (DSP), application-specific integrated circuits (ASICs) or field programmable gate arrays (FPGAs). In this case, either all steps of the method can be controlled or all steps of the method can be performed or one or more steps can be controlled and one or more steps can be performed. The computer program may be distributable, for example, via a network such as the Internet, a telephone or mobile radio network and/or a local area network. The computer program may be at least partially software and/or firmware of a processor. It may likewise be at least partially implemented as hardware. The computer program may be stored, for example, on a computer-readable storage medium, for example a magnetic, electrical, optical and/or other type of storage medium. The storage medium may be, for example, part of the processor, for example a (non-volatile or volatile) program memory of the processor or a part thereof. The storage medium may be a tangible or physical storage medium, for example.

In the following, further exemplary features and exemplary embodiments of the various aspects of the present disclosure will be described in more detail.

According to an exemplary embodiment of the various aspects, training the artificial neural network comprises:
- determining reference information at least partially based on i) the mathematical distribution representing the at least one cell object and ii) location information representing a location of the at least one cell object, wherein the reference information indicates at least the size and the location of the at least one cell object;
- determining prediction information at least partially based on the image information, wherein the prediction information is determined by the artificial neural network and indicates at least the location of the at least one cell object;
- comparing the reference information and the prediction information.

For example, reference information represents a plurality of cell objects indicated by the image information, wherein the reference information may include a plurality of mathematical distributions that each represent a respective cell object of the plurality of cell objects (e.g., such mathematical distributions may be given by respective Gaussian distributions).

For example, the reference information may then be determined based on i) the respective mathematical distributions that represent the respective cell objects and ii) on location information representing the respective locations of the cell objects within the digital image. Such respective locations of the cell objects may be indicated by a binary matrix of the digital image, which contains the value "1" at a particular location at which a cell object is located. The reference information may then be determined by applying the respective mathematical distributions to the binary matrix, such that the resulting reference information indicates the size of each cell object (as represented by the respective mathematical distributions) and the location of each cell object (as represented by the binary matrix of the digital image). The resulting reference information (e.g. in form of a matrix) may for example be used as ground truth image when training an artificial neural network.

For example, prediction information may be determined at least partially based on the image information of the digital image, wherein the prediction information is determined by the artificial neural network trained according to the method of the first aspect and indicates the locations of the plurality of cell objects within the digital image. In particular, the prediction information may be understood as output image that is determined by the artificial neural network based on the image information of the digital image as input image. This output image may for example comprise image information providing a prediction of the locations of the cell objects within the digital image. For example, the output image may be further processed for extracting location information representing respective locations of the cell objects. In addition, determining prediction information may further comprise processing the input image, such as by pooling steps for reducing the spatial dimension of the input image.

For example, the determined reference information as ground truth image is compared to the prediction information as prediction (e.g., by comparing a matrix representing the ground truth image and another matrix representing the output image provided by the artificial neural network).

According to an exemplary embodiment of the various aspects, the method further comprises:
- determining the size of the at least one cell object at least partially based on i) the image information indicating the at least one cell object and/or ii) annotation information of the at least one cell object.

According to an exemplary embodiment of the various aspects, the method further comprises:
- determining the location information representing the location of the at least one cell object at least partially based on the annotation information of the at least one cell object.

For example, the size of the at least one cell object may be determined at least partially based on the image information by using an algorithm detecting the specific pixel values of the image information that indicate the at least one cell object In another example, the size and/or the location of the at least one cell object may be determined at least partially based on annotation information of the at least one cell object (e.g., based on a respective bounding box specified by width, height and location coordinates x and y indicating the location of the upper left corner of the bounding box within the digital image). Such annotation information may for example be available for a respective digital image in form of a JSON file.

According to an exemplary embodiment of the various aspects, the at least one cell object indicated by the image information is located on i) a cell culture container or ii) a filter medium.

The at least one cell object may for example be located on a cell culture container (e.g., an agar plate) or on a filter medium (e.g., a filter membrane that may have a particular background colour and include a grid pattern). For example, the respective cell objects may then be indicated by image information of respective digital images, which may have been obtained from a digital camera capturing the cell culture container and filter medium.

According to an exemplary embodiment of the various aspects, the mathematical distribution representing the at least one cell object comprises at least one parameter, wherein determining the mathematical distribution comprises determining the at least one parameter based on a width of the at least one cell object.

As described above, determining the mathematical distribution representing the at least one cell object may for example comprise determining one or more parameters of the mathematical distribution, such that the determined mathematical distribution is tailored to model the image information (e.g. a plurality of pixel values) indicating the at least one cell object. Considering for example at least one parameter of the mathematical distribution that affects the broadness of the mathematical distribution, the mathematical distribution representing a larger cell object may comprise a larger (or smaller) value of the at least one parameter, and the mathematical distribution representing a smaller cell object may comprise a smaller (or larger) value of the at least one parameter.

According to an exemplary embodiment of the various aspects, the mathematical distribution representing the at least one cell object is a Gaussian distribution, wherein the at least one parameter is a variance of the Gaussian distribution.

For example, the mathematical distribution representing the at least one cell object may be a Gaussian distribution *f*(*r*) representing the at least one cell object indicated by image information of a digital image. In particular, the Gaussian distribution may for example depend on a size of the respective cell object that is represented by the Gaussian distribution. To this end, the Gaussian distribution comprises a variance parameter σ², which is determined based on a width of the respective represented cell object. Accordingly, a Gaussian distribution representing a larger cell object may comprise a larger value of the parameter *σ*, and another Gaussian distribution representing a smaller cell object may comprise a smaller value of the parameter σ.

According to an exemplary embodiment of the various aspects, the image information indicates at least a first cell object and a second cell object, wherein the first cell object at least partially overlaps with the second cell object, and wherein the method further comprises:
- determining a first mathematical distribution representing the first cell object, wherein the first mathematical distribution at least partially depends on a size of the first cell object;
- determining a second mathematical distribution representing the second cell object, wherein the second mathematical distribution at least partially depends on a size of the second cell object;
- determining, based on the first mathematical distribution and the seconds mathematical distribution, a common mathematical distribution representing the first cell object and the second cell object; and
- training the artificial neural network at least partially based on the common mathematical distribution and the image information.

Considering for example a first cell object and a second cell object, corresponding mathematical distributions representing these cell objects may be determined. In particular, the first mathematical distribution may comprise at least one parameter, which is determined based on a width of the first cell object, and the second mathematical distribution may comprise at least one parameter, which is determined based on a width of the second cell object.

Based on such a first and second mathematical distribution, a common mathematical distribution may for example be determined. For example, the common mathematical distribution may be determined by selecting the respective maximum value of the first mathematical distribution and the second mathematical distribution. In particular, considering the partial overlap between the first cell object and the second cell object, the common mathematical distribution in the overlap section may be determined by the respective maximum value of the first and second mathematical distribution (and not, e.g., by adding the values of the first and second mathematical distributions).

Considering the first and second cell object, training an artificial neural network as further described for the method of the first and second aspect may be based on the common mathematical distribution representing the first and second cell objects instead of the individual first and second mathematical distributions. Advantageously, the common mathematical distribution may more accurately represent the partial overlap between the first cell object and the second cell object and thereby prevent misinterpretation by the artificial neural network during the training process.

According to an exemplary embodiment of the various aspects, the image information of the digital image indicates a plurality of cell objects including the at least one cell object, and the method further comprises:
- determining, at least partially based on the image information, a plurality of mathematical distributions, wherein each mathematical distribution represents a respective cell object of the plurality of cell objects, and wherein each mathematical distribution at least partially depends on a size of the respective cell object that is represented by the respective mathematical distribution; and
- training the artificial neural network at least partially based on the plurality of mathematical distributions and the image information.

For example, a plurality of cell objects may be located on a cell culture container or on a filter medium, and may be indicated by image information of the respective digital image. Determining the plurality of mathematical distributions may then for example comprise determining, for each cell object of the plurality of cell objects, one or more parameters of the respective mathematical distributions, such that the determined mathematical distribution are tailored to model the image information (e.g. a plurality of pixel values) indicating the respective cell objects.

The plurality of cell objects may for example correspond to all cell objects that are located on a cell culture container or on a filter medium, or a subset of all cell objects that are located on a cell culture container or on a filter medium.

For example, as part of training the artificial neural network at least partially based on the plurality of mathematical distributions and the image information, the plurality of mathematical distributions may be used to determine reference information, which may then be used as ground truth image when training the artificial neural network.

According to an exemplary embodiment of the various aspects, the image information of the digital image comprises a plurality of pixel values of the digital image, wherein one or more pixel values of the plurality of pixel values indicate the at least one cell object.

For example, image information may include a plurality of pixel values, which define color and brightness of each point in the digital image or in a part of the digital image. In this example, image information may indicate at least one cell object by specific pixel values (e.g., reduced brightness or darker color) compared to pixel values indicating no cell object.

According to an exemplary embodiment of the various aspects of the present disclosure, the at least one cell object is a prokaryotic cell or a eukaryotic cell, or a structure formed by a prokaryotic cell or a eukaryotic cell, in particular a cellular colony, a microbial colony, a cellular cluster, a cellular aggregate, a spheroid or an organoid.

For example, a cell object (e.g. a biological cell object) may be understood as an individual prokaryotic or eukaryotic cell or a structure, preferably substantially circular (round) 2-dimensional structure, formed by such cell (e.g., a cellular colony, a microbial colony, a cellular cluster, a cellular aggregate, a spheroid or an organoid). A procaryotic cell may encompass bacteria (e.g., a cell of Bacillus subtilis, Pseudomonas aeruginosa, Spiroplasma citri, Clostridum sporogenes, Staphylococcus aureus, or Mycoplasma sp.) and archaea, a eukaryotic cell includes an animal cell (e.g., CHO cell or Sf9 cell), a human cell (e.g., NCI-60 cell, Jurkat cell, HL-60 cell, MCF-7 cell, Saos-2 cell, PC3 cell, HepG2 cell, HEK293 cell or HeLa cell), a fungal cell (e.g., a yeast cell, a cell of Candida sp., Aspergillus sp. or Penicillium sp.) or a plant cell as well as any unicellular eukaryotic organism. A cell object (e.g. a biological cell object) may also be a vesicle (e.g., an exosome or endosome generated from a biological cell, or a liposome), a virus or a phage, or a structure, preferably, formed by such vesicle, virus or phage.

Further considering the disclosed features above, the disclosure of a method step of the method of the present disclosure shall also be considered as a disclosure of an apparatus being configured to perform the respective method step and as a disclosure of an apparatus comprising means for performing the respective method step. Likewise, the disclosure of an apparatus being configured to perform a method step or the disclosure of an apparatus comprising means for performing a method step shall also be considered as a disclosure of the method step itself.

It is to be understood that the presentation of the embodiments disclosed herein is merely by way of examples and non-limiting.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

Some exemplary embodiments of the present disclosure are described in the following with reference to the accompanying drawings.
- Figs. 1a, 1b: illustrate cell objects according to exemplary environments of the present disclosure;
- Fig. 2: illustrates a mathematical distribution according to an exemplary environment of the present disclosure;
- Fig. 3: illustrates reference information according to an exemplary environment of the present disclosure;
- Figs. 4a, 4b: illustrate a common mathematical distribution representing a first cell object and a second cell object according to an exemplary environment of the present disclosure;
- Fig. 5: shows a flow chart illustrating an exemplary embodiment of the method according to the first aspect of the present disclosure;
- Fig. 6: shows a flow chart illustrating an exemplary embodiment of the method according to the second aspect of the present disclosure;
- Fig. 7: shows a flow chart illustrating an exemplary embodiment of the method according to the third aspect of the present disclosure;
- Fig. 8: shows a schematic illustration of an exemplary embodiment of an apparatus according to the fourth aspect of the present disclosure; and
- Fig. 9: shows exemplary embodiments of storage media.

### DETAILED DESCRIPTION OF THE FIGURES

The following description serves to deepen the understanding of the present disclosure and shall be understood to complement and be read together with the description of exemplary embodiments of the present disclosure as provided in the above section of this description.

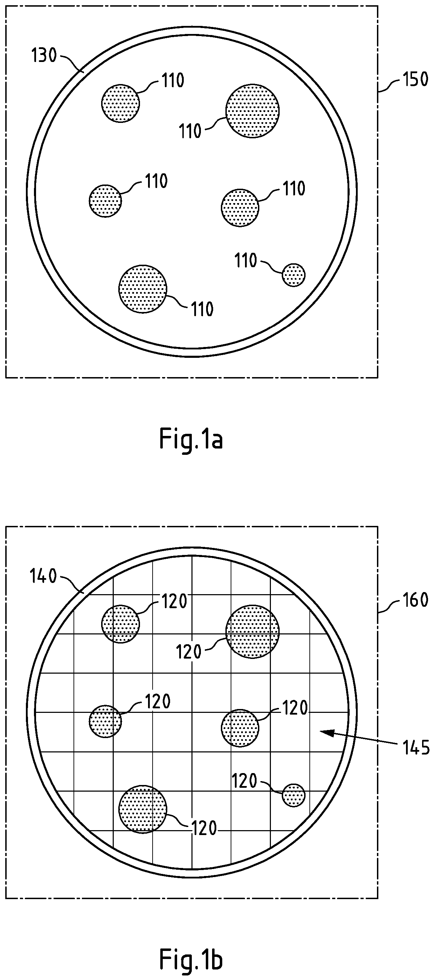

Figs. 1a and 1b illustrate cell objects 110, 120 according to exemplary environments of the present disclosure.

As shown in Fig. 1a and Fig. 1b, a plurality of cell objects 110, 120 may be located on a cell culture container 130 (e.g., an agar plate) or on a filter medium 140 (e.g., a filter membrane that may have a particular background colour and include a grid pattern 145). The pluralities of cell objects 110, 120 are indicated by image information of respective digital images 150, 160, which may have been obtained from a digital camera capturing the cell culture container 130 and filter medium 140.

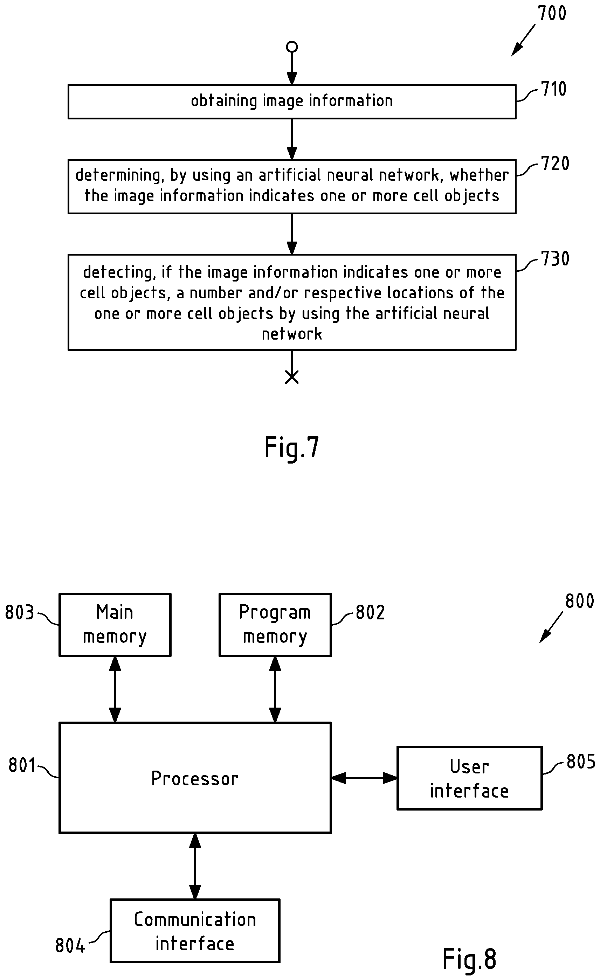

Without limiting the scope of the present disclosure, it may be assumed in the following that the plurality of cell objects 110, 120 shown in Fig. 1a and Fig. 1b are bacterial colonies 110, 120, wherein an artificial neural network implemented by the apparatus 800 shown in Fig. 8 is used to detect the number and location of the bacterial colonies 110, 120 indicated by the digital images 150, 160.

For the respective digital images 150, 160, annotation information of the bacterial colonies 110, 120 as indicated by the digital images may be available (e.g. in form of a JSON file). Such annotation information may include location information representing the respective locations of the bacterial colonies 110, 120 within the digital images 150, 160 (e.g. in form of bounding boxes specified by width, height and location coordinates x and y indicating the location of the upper left corner of the bounding box within the digital image). The annotation information may also indicate a particular class of the bacterial colony (e.g., P. aeruginosa), a number of the bacterial colonies of this class indicated by the digital image and further details of the respective bacterial colonies.

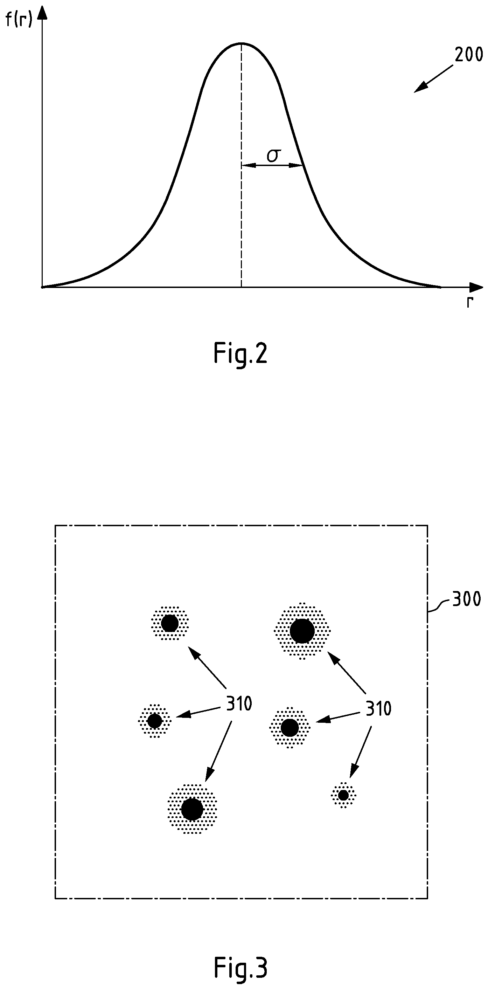

Fig. 2 illustrates a mathematical distribution 200 according to an exemplary environment of the present disclosure.

Without limiting the scope of the present disclosure, it may be assumed in the following that the mathematical distribution 200 is a Gaussian distribution *f*(r) representing a bacterial colony 110, 120 indicated by image information of a digital image 150, 160 as shown in Fig. 1a and Fig. 1b. In particular, the Gaussian distribution 200 may depend on a size of the respective bacterial colony 110, 120 that is represented by the Gaussian distribution 200. To this end, the Gaussian distribution comprises a variance parameter *σ*², which is determined based on a width of the respective represented bacterial colony 110, 120. Accordingly, a Gaussian distribution 200 representing a larger bacterial colony 110, 120 may comprise a larger value of the parameter *σ,* and another Gaussian distribution 200 representing a smaller bacterial colony 110, 120 may comprise a smaller value of the parameter σ.

As another example, further parameters of the Gaussian distribution 200 may be determined based on the respective bacterial colony 110, 120 that is represented by the Gaussian distribution 200, such as for example a normalization parameter *τ*.

Considering a particular bacterial colony 110, 120 that is represented by the Gaussian distribution 200, a size (e.g. a width) of this bacterial colony may be determined based on the annotation information of this bacterial colony (e.g., based on the respective bounding box specified by width and height). Additionally, or alternatively, the size (e.g. a width) of this bacterial colony may also be determined based on the respective image information indicating this bacterial colony (e.g., by using an algorithm detecting the specific pixel values of the image information that indicate the bacterial colony).

Fig. 3 illustrates reference information 300 according to an exemplary environment of the present disclosure.

Without limiting the scope of the present disclosure, it may be assumed in the following that the reference information 300 represents the plurality of bacterial colonies 110 indicated by the image information of the digital image 150 as shown in Fig. 1a. As a non-limiting example, it may further be assumed that the reference information 300 includes a plurality of mathematical distributions 310 that each represent a bacterial colony 110 shown in Fig. 1a. Such mathematical distributions 310 may be given by respective Gaussian distributions 200 as shown in Fig. 2.

In particular, each Gaussian distribution 310 depends on the size of the respective bacterial colony 110 that is represented by the respective Gaussian distribution 310 (e.g. by determining the respective individual σ parameter of each Gaussian distribution 310 based on the width of the respective bacterial colony 110).

The reference information 300 may be determined based on i) the respective Gaussian distributions 310 that represent the bacterial colonies 110 as shown in Fig. 1 and ii) on location information representing the respective locations of the bacterial colonies 110 within the digital image 150 as shown in Fig. 1a. Such respective locations of the bacterial colonies 110 may be indicated by a binary matrix of the digital image 150, which contains the value "1" at a particular location at which a bacterial colony is located. The reference information 300 may then be determined by multiplying the respective Gaussian distributions 310 with the binary matrix, such that the resulting reference information 300 indicates the size of each bacterial colony 110 (as represented by the respective Gaussian distributions 310) and the location of each bacterial colony 110 (as represented by the binary matrix of the digital image 150).

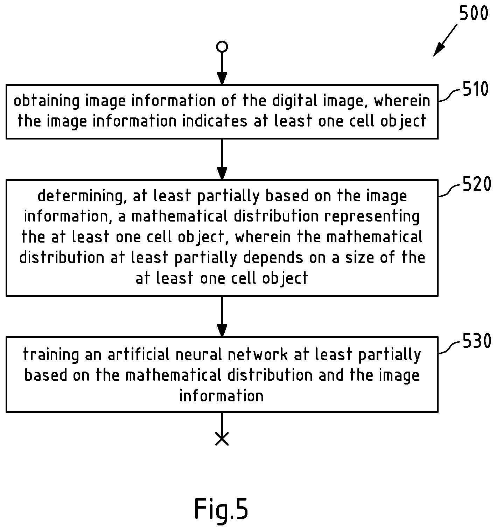

The resulting reference information 300 (e.g. in form of a matrix) may then be used as ground truth image when training an artificial neural network as further described with reference to Fig. 5 (see action 530).

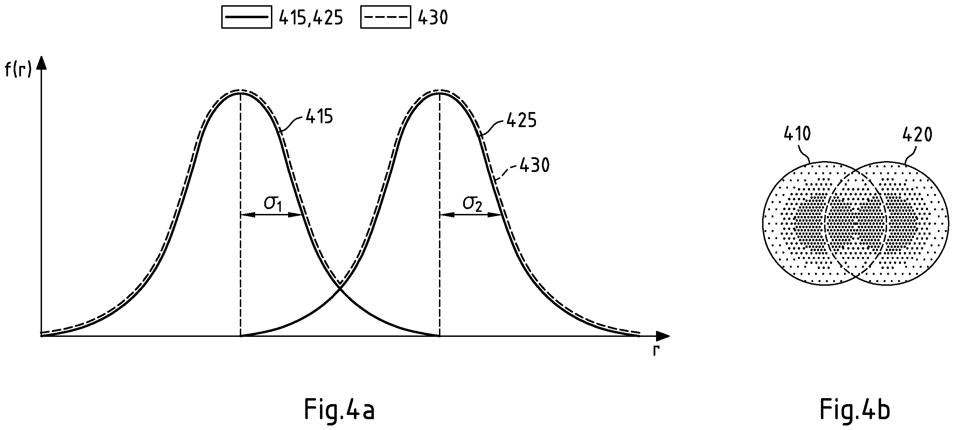

Figs. 4a and 4b illustrate a common mathematical distribution 430 representing a first cell object 410 and a second cell object 420 according to an exemplary environment of the present disclosure.

Without limiting the scope of the present disclosure, it may be assumed in the following that the first cell object 410 and the second cell object 420 shown in Fig. 4a are bacterial colonies indicated by image information of the digital image 150 or digital image 160 as shown in Figs. 1a and 1b. In particular, the first bacterial colony 410 partially overlaps with the second bacterial colony 420.

Considering the first and second bacterial colonies 410, 420 shown in Fig. 4a, corresponding mathematical distributions representing these bacterial colonies may be determined. Assuming that such mathematical distributions may be Gaussian distributions (e.g., Gaussian distribution 200 as shown in Fig. 2), Fig. 4b shows a first Gaussian distribution 415 representing the first bacterial colony 410 and second Gaussian distribution 425 representing the second bacterial colony 420. In particular, the first Gaussian distribution 415 may comprise a parameter *σ*₁, which is determined based on a width of the first bacterial colony 415, and the second Gaussian distribution 425 may comprise a parameter σ₂, which is determined based on a width of the second bacterial colony 420.

Based on the first Gaussian distribution 415 and the second Gaussian distribution 425, a common mathematical distribution 430 (shown by a dashed line in Fig. 4b) may be determined. The common mathematical distribution 430 may be determined by selecting the respective maximum value of the first Gaussian distribution 415 and the second Gaussian distribution 425. In particular, considering the partial overlap between the first bacterial colony 410 and the second bacterial colony 420, the common mathematical distribution 430 in the overlap section may be determined by the respective maximum value of the first and second Gaussian distributions 412, 425 (and not, e.g., by adding the values of the first and second Gaussian distributions 415, 425).

Considering the first and second bacterial colonies 410, 420, training an artificial neural network as further described with reference to Fig. 5 (see action 530) may be based on the common mathematical distribution 430 representing the first and second bacterial colonies 410, 420 instead of the individual first and second Gaussian distributions 415 and 425.

Fig. 5 shows a flow chart 500 illustrating an exemplary embodiment of the method according to the first aspect of the present disclosure.

Without limiting the scope of the present disclosure, the actions of flow chart 500 are described in the following with reference to Figs. 1a, 2 and 3. As a non-limiting example, it may further be assumed that the actions of flow chart 500 may be performed by the apparatus 800 as described with reference to Fig. 8, which may also implement the artificial neural network.

Action 510 is obtaining image information of the digital image, wherein the image information indicates at least one cell object.

For example, the apparatus 800 may obtain image information of the digital image 150 (e.g., a plurality of pixel values of the digital image 150), wherein the obtained image information indicates at least one of the respective bacterial colonies 110. For example, the apparatus 800 may obtain the image information by receiving the image information from a digital camera capturing the cell culture container 130 or from a database storing the digital image 150.

Action 520 is determining, at least partially based on the image information, a mathematical distribution representing the at least one cell object, wherein the mathematical distribution at least partially depends on a size of the at least one cell object.

For example, the apparatus 800 may determine based on the image information obtained in action 510 a Gaussian distribution 200 that represents a bacterial colony 110. In particular, the Gaussian distribution 200 determined in action 520 depends on a size of the respective bacterial colony 110 that is represented by the Gaussian distribution 200. To this end, the Gaussian distribution 200 comprises a variance parameter *σ*², which is determined based on a width of the respective bacterial colony 110.

Considering that the image information of the digital image 150 indicates a plurality of bacterial colonies 110, the apparatus 800 may determine a plurality of Gaussian distributions 200 in action 520, wherein each Gaussian distribution 200 represents a respective bacterial colony of the plurality of bacterial colonies 110, and wherein each Gaussian distribution 200 at least partially depends on a size of the respective bacterial colony 110 that is represented by the respective Gaussian distribution 200.

As part of action 520, the apparatus 800 may determine the size of the bacterial colonies 110 based on the image information obtained in action 510 (e.g., by using an algorithm detecting the specific pixel values of the image information that indicate the bacterial colony 110) or based on the annotation information of the bacterial colonies 110 (e.g., based on the respective bounding box specified by width and height). Such annotation information may be available (e.g. in form of a JSON file) in the program memory 802 of the apparatus 800.

Action 530 is training an artificial neural network at least partially based on the mathematical distribution and the image information.

For example, the apparatus 800 may train an artificial neural network at least partially based on the Gaussian distributions 200 determined in action 520 and the image information of the digital image 150 obtained in action 510.

As part of action 530, the apparatus 800 may determine the reference information 300 based on i) the respective mathematical distributions 310 (e.g., given by respective Gaussian distributions 200) that represent the bacterial colonies 110 and ii) on location information representing the respective locations of the bacterial colonies 110 within the digital image 150. The reference information 300 (e.g. in form of a matrix) indicates the size (e.g. the width) and the location of the bacterial colonies 110 within the digital image 150 and may be understood as ground truth image when training the artificial neural network in action 530.

The apparatus 800 may further determine the location information representing the respective locations of the bacterial colonies 110 within the digital image 150 based on the annotation information of the bacterial colonies 110. In particular, such annotation information may include location information representing the respective locations of the respective bacterial colonies 110 within the digital image 150 in form of bounding boxes specified by width, height, and location coordinates x and y indicating the location of the upper left corner of the bounding box within the digital image 150. The annotation information may then be available (e.g. in form of a JSON file) in the program memory 802 of the apparatus 800.

As further part of action 530, the apparatus 800 may determine prediction information at least partially based on the image information of the digital image 150, wherein the prediction information is determined by the artificial neural network trained in action 530 and indicates the locations of the bacterial colonies 110. In particular, the prediction information may be understood as output image that is determined by the artificial neural network based on the digital image 150 as input image. This output image may comprise image information providing a prediction of the locations of the bacterial colonies 110 within the digital image 150. The output image may be further processed for extracting location information representing respective locations of the bacterial colonies 110. In addition, determining prediction information may further comprise processing the input image, such as by pooling steps for reducing the spatial dimension of the input image.

As further part of action 530, the apparatus 800 may compare the reference information 300 as ground truth image and the prediction information as prediction (e.g., by comparing a matrix representing the ground truth image and another matrix representing the output image provided by the artificial neural network). By this comparison, the performance of the artificial neural network may be assessed, wherein a difference between the prediction and the ground truth image may be quantified by calculating a loss function (e.g. using a mean squared error) that measures the error in the artificial neural network's prediction. The calculated loss may then be used to perform backpropagation, wherein gradients of the loss with respect to the network's weights are computed and used for updating the weights (e.g., through an optimization algorithm such as gradient descent).

The method shown in flow chart 500 provides an advantageous approach for training an artificial neural network for detecting bacterial colonies 110, 120 indicated by image information of the digital images 150, 160. In particular, by determining Gaussian distributions 310 that represent the respective bacterial colonies 110, 120 to be detected and that depends on the respective sizes of the bacterial colonies 110, 120, size variations among a plurality of bacterial colonies can be taken into account for the training process of an artificial neural network. Accordingly, the network's performance of detecting and counting bacterial colonies can be improved.

Further, the method shown in flow chart 500 is advantageous compared to conventional image analysis techniques. For example, the approach of the present disclosure goes beyond the technique of density-based counting, which lacks object detection and rather focusses on mere counting of bacterial colonies, thereby neglecting the actual location of the bacterial colonies. Instead, the present approach allows for accurately detecting bacterial colonies and their location, but still does not require precise (e.g. pixel-wise) segmentation for each colony.

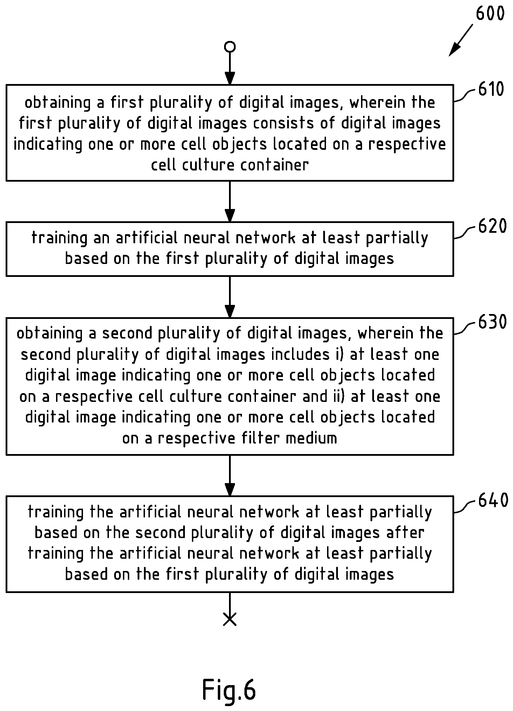

Fig. 6 shows a flow chart 600 illustrating an exemplary embodiment of the method according to the second aspect of the present disclosure.

Without limiting the scope of the present disclosure, the actions of flow chart 600 are described in the following with reference to Figs. 1a, 2, and 3. As a non-limiting example, it may further be assumed that the actions of flow chart 600 may be performed by the apparatus 800 as described with reference to Fig. 8, which may also implement the artificial neural network.

Action 610 is obtaining a first plurality of digital images, wherein the first plurality of digital images consists of digital images indicating one or more cell objects located on a respective cell culture container.

For example, the apparatus 800 may obtain the first plurality of digital images, which only includes digital images indicating bacterial colonies that are located on a respective cell culture container (such as, e.g., the digital image 150). In particular, the first plurality of digital images does not include digital images indicating bacterial colonies that are located on a filter medium (such as, e.g., digital image 160).

As part of action 610, the apparatus 800 may obtain respective image information (e.g., a plurality of pixel values) of each digital image of the first plurality of digital images as described with reference to action 510 shown in Fig. 5 (e.g. by performing action 510 repeatedly for each digital image of the first plurality of digital images).

Action 620 is training an artificial neural network at least partially based on the first plurality of digital images.

For example, the apparatus 800 may train the artificial neural network based on the first plurality of digital images obtained in action 610 by determining Gaussian distributions representing bacterial colonies (e.g., as in action 520 shown in Fig. 5) and by training the artificial neural network based on these Gaussian distributions and the image information (e.g., as in action 530 shown in Fig. 5) for each digital image of the first plurality of digital images (e.g., by performing actions 520 and 530 repeatedly for each digital image of the first plurality of digital images).

Action 630 is obtaining a second plurality of digital images, wherein the second plurality of digital images includes i) at least one digital image indicating one or more cell objects located on a respective cell culture container and ii) at least one digital image indicating one or more cell objects located on a respective filter medium.

For example, the apparatus 800 may obtain the second plurality of digital images, which is (e.g., in contrast to the first plurality of digital images obtained in action 610) a mixture of digital images indicating bacterial colonies that are located on a respective cell culture container (such as, e.g., the digital image 150) and digital images indicating bacterial colonies that are located on a filter medium (such as, e.g., the digital image 160).

As part of action 630, the apparatus 800 may obtain respective image information (e.g., a plurality of pixel values) of each digital image of the second plurality of digital images as described with reference to action 510 shown in Fig. 5 (e.g. by performing action 510 repeatedly for each digital image of the second plurality of digital images).

Action 640 is training the artificial neural network at least partially based on the second plurality of digital images after training the artificial neural network at least partially based on the first plurality of digital images.

For example, the apparatus 800 may train the artificial neural network based on the second plurality of digital images obtained in action 630 by determining Gaussian distributions representing bacterial colonies (e.g., as in action 520 shown in Fig. 5) and by training the artificial neural network based on these Gaussian distributions and the image information (e.g., as in action 530 shown in Fig. 5) for each digital image of the second plurality of digital images (e.g., by performing actions 520 and 530 repeatedly for each digital image of the second plurality of digital images).

The method shown in flow chart 600 provides an advantageous approach for training an artificial neural network for detecting bacterial colonies 110, 120 indicated by image information of the digital images 150, 160. In particular, size variations among a plurality of bacterial colonies can be taken into account for the training process of an artificial network as described with reference to Fig. 5. In addition, an artificial neural network trained according to the method shown in flow chart 600 may be particularly suitable for detecting and counting bacterial colonies regardless of whether such bacterial colonies are located on a cell culture container (e.g. an agar plate) or on a filter medium (e.g. a filter membrane of a particular background colour and including a grid pattern). By pretraining an artificial neural network with digital images indicating bacterial colonies located on cell culture containers and afterwards fine-tuning the pretrained network by training with both digital images indicating bacterial colonies located on cell culture containers and filter media, transfer learning may be used to adapt the network for detecting bacterial colonies under both conditions. This way, it may be avoided that an artificial neural network would need to be trained from scratch separately for detecting bacterial colonies located on cell culture containers and filter media.

Fig. 7 shows a flow chart 700 illustrating an exemplary embodiment of the method according to the third aspect of the present disclosure.

Without limiting the scope of the present disclosure, the actions of flow chart 700 are described in the following with reference to Fig. 1a. As a non-limiting example, it may further be assumed that the actions of flow chart 700 may be performed by the apparatus 800 as described with reference to Fig. 8, which may also implement the artificial neural network.

Action 710 is obtaining image information.

For example, the apparatus 800 may obtain image information of the digital image 150 (e.g., a plurality of pixel values of the digital image 150), wherein the obtained image information indicates at least one of the respective bacterial colonies 110 (e.g., as in action 510 shown in Fig. 5). In another case, the apparatus 800 may obtain image information of a digital image that does not indicate any bacterial colonies located on a cell culture container or filter medium (if, e.g., no growth of bacterial colonies has occurred by the time of capturing the digital image).

Action 720 is determining, by using an artificial neural network, whether the image information indicates one or more cell objects.

For example, the apparatus 800 may use an artificial neural network trained as described with reference to Fig. 5 or Fig. 6 to determine whether image information obtained in action 710 indicates one or more bacterial colonies.

Action 730 is detecting, if the image information indicates one or more cell objects, a number and/or respective locations of the one or more cell objects by using the artificial neural network.

For example, the apparatus 800 may use an artificial neural network trained as described with reference to Fig. 5 or Fig. 6 to detect a number and/or respective locations of the one or more bacterial colonies 110 indicated by the image information of the digital image 150. In another case, if the image information obtained in action 710 does not indicate any bacterial colonies located on a cell culture container or filter medium, the apparatus 800 may use the artificial neural network to determine that there are no bacterial colonies indicated by the obtained image information.

By using an artificial neural network, which is trained as described with reference to Fig. 5 or Fig. 6, the method shown in flow chart 700 provides an advantageous approach for detecting and counting bacterial colonies under diverse conditions such as for example size variation among bacterial colonies and bacterial colonies being located on different backgrounds.

Fig. 8 shows a schematic illustration of an exemplary embodiment of an apparatus 800 according to the fourth aspect of the present disclosure.

For example, the apparatus 800 may comprise a processor 801 and, connected to the processor 801, a first memory as a program and data memory 802, a second memory as a main memory 803, a communication interface 804 and a user interface 805.

The processor 801 may be microprocessor, a microcontrol unit, a microcontroller, a digital signal processor (DSP), an application specific integrated circuit (ASIC) or a field programmable gate array (FPGA). The processor 801 may for example be understood as central processing unit (CPU, e.g. preferably for executing general-purpose instructions) or as graphics processing unit (GPU, e.g. preferably for handling parallel processing tasks such as training an artificial neural network). For example, the apparatus 800 may also comprise multiple processors 801. The processor 801 may execute programming instructions stored in the program memory 802 and store intermediate results in the main memory 803. The program memory 802 may contain program instructions of a computer program (e.g. a computer program according to the fifth aspect of the present disclosure) that cause the processor 801 to perform and/or control a method according to the present disclosure, when the processor 801 executes these program instructions stored in program memory 802. Moreover, the program memory 802 may store one or more databases.

The program memory 802 may further contain an operating system of the apparatus 800, which is loaded at least in part into main memory 803 when the apparatus 800 is started, and is executed by the processor 801. In particular, when the apparatus 800 is started, at least a part of the core of the operating system is loaded into the main memory 803 and executed by the processor 801. A program memory may be a non-volatile memory such as a Flash memory, a magnetic memory, an EEPROM (Electrically Erasable Programmable Read Only Memory) and/or an optical memory. The main memory 803 may be a volatile or non-volatile memory, in particular a random-access memory (RAM) such as a static RAM (SRAM), a dynamic RAM (DRAM), a ferroelectric RAM (FeRAM) and/or a magnetic RAM (MRAM).

The main memory 803 and the program memory 802 may also be designed as one memory. Alternatively, the main memory 803 and/or program memory 802 may each be formed by multiple memories. Further, the main memory 803 and/or program memory 802 may also be part of the processor 801.

The processor 801 may control the communication interface 804, which may be designed as a wireless and/or wired communication interface. A wireless and/or wired communication interface may receive information (via a wireless and/or wired communication path) and forward it to the processor 801 and/or may receive information from the processor 801 and send it (via a wireless and/or wired communication path) to another apparatus.

Further, the processor 801 may control the user interface 805, which may be configured for capturing information in the form of a user input (e.g. as a keyboard or mouse input and/or as a voice input and/or as a gesture) and/or for outputting information in the form of an audible and/or visual user output (e.g. as a voice output and/or as a text output).

The components 801 to 805 of the apparatus 800 may be communicatively and/or operatively connected to one another via one or more bus systems (e.g. one or more serial and/or parallel bus connections). In further examples, the apparatus 800 may comprise further components besides the components 801 to 805.

Without limiting the scope of the present disclosure, the apparatus 800 may be understood as a server or a terminal device (e.g. a stationary device such as e.g. personal computer or a mobile device such as e.g. a telephone, a smartphone, a tablet, a laptop computer or similar). In other examples, the apparatus 800 may be a component, like a chip, circuitry on a chip or a plug-in board of an electronic device.

For example, the components 801 to 805 of the apparatus 800 may be used to implement an artificial neural network (e.g., the artificial neural network trained according to the actions shown in Fig. 5 and Fig. 6 and used according to the actions shown in Fig. 7). In particular, the processor 801 may perform mathematical operations needed for the artificial neural network, such as matrix multiplications, additions and activations. During training as described with reference to Fig. 5 and Fig. 6, the processor 801 may handle forward propagation (e.g., calculating outputs) and backpropagation (e.g., updating weights based on errors). The program memory 802 and main memory 803 may be used to store the artificial neural network's parameters (e.g., weights and biases), input data, intermediate results (e.g., outputs from each network layer) and gradients during training.

An artificial neural network implemented by the components 801 to 805 of the apparatus 800 may be understood as a computational model inspired by the structure and function of the human brain (which, e.g., is specifically designed to perform image analysis). Such an artificial neural network may consist of layers of interconnected nodes, where each connection has an associated weight. The artificial neural network processes input data (e.g., image information of digital images as shown in Figs. 1a and 1b) by passing it through these layers and performing a series of mathematical operations. The final output of the artificial neural network may then be used to make predictions as described with reference to Fig. 5 to Fig. 7.

To give a non-limiting example, the artificial neural network according to the various aspects of the present disclosure may be a convolutional neural network (CNN), which may be understood as a type of neural network particularly suited for processing grid-like data such as images. In addition to standard layers, CNNs include convolutional layers, which apply filters to input data to extract spatial features (e.g., edges, textures and shapes). These features are then passed through pooling layers to reduce the dimensionality of the input data while preserving essential information.

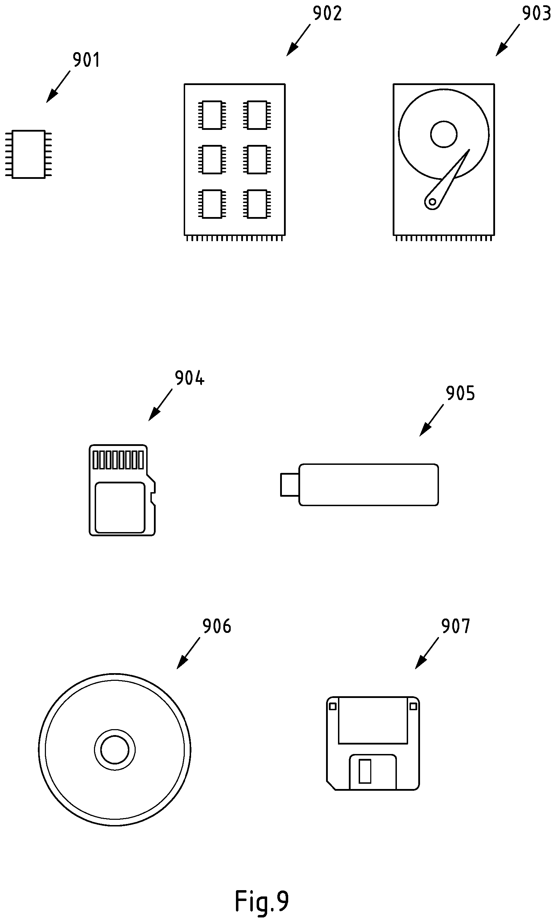

Fig. 9 shows exemplary embodiments of storage media. For example, a storage medium may be a magnetic, electrical, optical and/or other kind of storage medium. A storage medium may further be part of a processor (e.g., the processor 801 of the apparatus 800 shown in Fig. 8), a (non-volatile or volatile) program memory of the processor 801 or a part thereof (e.g., the program memory 802). Exemplary embodiments of a storage medium are a flash memory 901, an SSD hard disc 902, a magnetic hard disc 903, a memory card 904, a memory stick 905 (e.g. a USB stick), a CD ROM or DVD 906 of a floppy disc 907.

It will be understood that the embodiments disclosed herein are only exemplary, and that any feature presented for a particular exemplary embodiment may be used with the present disclosure on its own or in combination with any feature presented for the same of another particular exemplary embodiment and/or in combination with any other feature not mentioned. It will further be understood that any feature presented for an example embodiment in a particular category may also be used in a corresponding manner in an example embodiment of any other category.

In the present disclosure, the wording "A, or B, or C, or a combination thereof" or "at least one of A, B and/or C" may be understood to be not exhaustive and to include at least the following: (i) A, or (ii) B, or (iii) C, or (iv) A and B, or (v) A and C, or (vi) B and C, or (vii) A and B and C.

## Claims

1. A computer-implemented method of training an artificial neural network for detecting cell objects indicated by a digital image, the method comprising:
- obtaining image information of the digital image, wherein the image information indicates at least one cell object;
- determining, at least partially based on the image information, a mathematical distribution representing the at least one cell object, wherein the mathematical distribution at least partially depends on a size of the at least one cell object; and
- training the artificial neural network at least partially based on the mathematical distribution and the image information.

2. The method according to claim 1, wherein training the artificial neural network comprises:
- determining reference information at least partially based on i) the mathematical distribution representing the at least one cell object and ii) location information representing a location of the at least one cell object, wherein the reference information indicates at least the size and the location of the at least one cell object;
- determining prediction information at least partially based on the image information, wherein the prediction information is determined by the artificial neural network and indicates at least the location of the at least one cell object;
- comparing the reference information and the prediction information.

3. The method according to claim 1 or claim 2, wherein the method further comprises:
- determining the size of the at least one cell object at least partially based on i) the image information indicating the at least one cell object and/or ii) annotation information of the at least one cell object

4. The method according to any of the claims 1 to 3, wherein the method further comprises:
- determining the location information representing the location of the at least one cell object at least partially based on the annotation information of the at least one cell object.

5. The method according to any of the claims 1 to 4, wherein the at least one cell object indicated by the image information is located on i) a cell culture container or ii) a filter medium.

6. The method according to any of the claims 1 to 5, wherein the mathematical distribution representing the at least one cell object comprises at least one parameter, and wherein determining the mathematical distribution comprises determining the at least one parameter based on a width of the at least one cell object.

7. The method according to claim 6, wherein the mathematical distribution representing the at least one cell object is a Gaussian distribution, wherein the at least one parameter is a variance of the Gaussian distribution.

8. The method according to any of the claims 1 to 7, wherein the image information indicates at least a first cell object and a second cell object, wherein the first cell object at least partially overlaps with the second cell object, and wherein the method further comprises:
- determining a first mathematical distribution representing the first cell object, wherein the first mathematical distribution at least partially depends on a size of the first cell object;
- determining a second mathematical distribution representing the second cell object, wherein the second mathematical distribution at least partially depends on a size of the second cell object;
- determining, based on the first mathematical distribution and the second mathematical distribution, a common mathematical distribution representing the first cell object and the second cell object; and
- training the artificial neural network at least partially based on the common mathematical distribution and the image information.

9. The method according to any of the claims 1 to 8, wherein the image information of the digital image indicates a plurality of cell objects including the at least one cell object, and wherein the method further comprises:
- determining, at least partially based on the image information, a plurality of mathematical distributions, wherein each mathematical distribution represents a respective cell object of the plurality of cell objects, and wherein each mathematical distribution at least partially depends on a size of the respective cell object that is represented by the respective mathematical distribution; and
- training the artificial neural network at least partially based on the plurality of mathematical distributions and the image information.

10. The method according to any of the claims 1 to 9, wherein the image information of the digital image comprises a plurality of pixel values of the digital image, and wherein one or more pixel values of the plurality of pixel values indicate the at least one cell object.

11. A computer-implemented method of training an artificial neural network for detecting cell objects indicated by a digital image, the method comprising:
- obtaining a first plurality of digital images, wherein the first plurality of digital images consists of digital images indicating one or more cell objects located on a respective cell culture container;
- training the artificial neural network at least partially based on the first plurality of digital images;
- obtaining a second plurality of digital images, wherein the second plurality of digital images includes i) at least one digital image indicating one or more cell objects located on a respective cell culture container and ii) at least one digital image indicating one or more cell objects located on a respective filter medium; and
- training the artificial neural network at least partially based on the second plurality of digital images after training the artificial neural network at least partially based on the first plurality of digital images.

12. A computer-implemented method for detecting cell objects indicated by a digital image, the method comprising:
- obtaining image information;
- determining, by using an artificial neural network trained according to any of the claims 1 to 11, whether the image information indicates one or more cell objects; and
- detecting, if the image information indicates one or more cell objects, a number and/or respective locations of the one or more cell objects by using the artificial neural network.

13. The method according to any of the claims 1 to 12, wherein the at least one cell object is a prokaryotic cell or a eukaryotic cell, or a structure formed by a prokaryotic cell or a eukaryotic cell, in particular a cellular colony, a microbial colony, a cellular cluster, a cellular aggregate, a spheroid or an organoid.

14. An apparatus comprising means for performing the method of any one of the claims 1 to 13.

15. A computer program comprising instructions which, when the program is executed by a computer, cause the computer to perform the method of any one of the claims 1 to 13.
